(19) **Europäisches Patentamt**
**European Patent Office**
**Office européen des brevets**

(11) **EP 3 447 712 B1**

(12) **EUROPEAN PATENT SPECIFICATION**

(45) Date of publication and mention of the grant of the patent:
**22.07.2020  Bulletin 2020/30**

(51) Int Cl.:
**G06Q 30/02** *(2012.01)*       **G06F 11/34** *(2006.01)*
**H04L 29/08** *(2006.01)*

(21) Application number: **18198871.8**

(22) Date of filing: **26.02.2014**

(54) **MEASUREMENT OF MULTI-SCREEN  INTERNET  USER  PROFILES, TRANSACTIONAL BEHAVIORS AND STRUCTURE OF USER POPULATION THROUGH A HYBRID CENSUS AND USER BASED MEASUREMENT METHODOLOGY**

MESSUNG VON MEHRSCHIRM-INTERNET-BENUTZERPROFILEN, TRANSAKTIONSVERHALTEN UND STRUKTUR DER BENUTZERPOPULATION DURCH EINE HYBRIDZÄHLUNGS- UND BENUTZERBASIERTE MESSMETHODE

MESURE DE PROFILS D'UTILISATEUR DE L'INTERNET À MULTIPLES ÉCRANS, DE COMPORTEMENTS TRANSACTIONNELS ET DE STRUCTURE DE POPULATION D'UTILISATEURS PAR LE BIAIS D'UN RECENSEMENT HYBRIDE ET MÉTHODOLOGIE DE MESURE BASÉE SUR L'UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.02.2019  Bulletin 2019/09**

(62) Document number(s) of the earlier application(s) in accordance with Art. 76 EPC:
**14884200.8 / 3 111 399**

(73) Proprietor: **Verto Analytics OY**
**00530 Helsinki (FI)**

(72) Inventors:
 • **VERKASALO, Hannu**
   **6390 Engelberg (CH)**
 • **MODZELEWSKI, Chris**
   **Edison, New Jersey 08837 (US)**
 • **MALMI, Eric**
   **02600 Espoo (FI)**

(74) Representative: **Berggren Oy, Helsinki & Oulu**
**P.O. Box 16**
**Eteläinen Rautatiekatu 10A**
**00101 Helsinki (FI)**

(56) References cited:
**US-A1- 2012 089 697       US-A1- 2013 097 312**
**US-A1- 2013 197 679       US-A1- 2013 198 125**
**US-A1- 2013 204 999**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

Generally the invention pertains to digital devices, communications including wired and mobile communications, and related applications and services. In particular, however not exclusively, the present invention concerns collection of multi-point Internet hardware and usage data, fusing this data together, and publishing frequently representative metrics around both the market level and user level behaviors with digital devices along with pertinent market structure information.

BACKGROUND

Various modern media measurement and analytics solutions are focused on collecting data based on only one source. Generically the sources are so-called panel studies where user behaviors are metered either through dedicated devices or downloadable software meters, or through embedded tags (on (web) sites or apps (applications)) or SDKs (apps) that collect data on a particular app. Alternatively, desired data may be acquired through traditional user survey studies or interviews which suffer from the problem of respondent subjectivity and inaccuracy.

In the aforementioned studies the evident goal is to get a grasp of the underlying trends, habits, problems and needs of users. However, each of the current methods has its own underlying problems. For example, with few exceptions, the costs of recruiting, maintaining, and validating a panel that is representative behaviorally and demographically, are prohibitive. SDKs (software development kit) and tags only provide data on participating properties but not all. Surveys and interviews are a better indication of brand strength than actual behavior and there is no existing approach that could provide information conceptually on all key areas of the Internet ecosystem in terms of 'hard', objective, observation-driven data: hardware installed base and sales, content and app distribution, and usage/transactions as completed by the user.

The evolution of media and Internet services such as web sites or web-accessible services is now faster than ever, and new devices emerge in the market place continuously. Also, one user typically has multiple, rather than one, Internet-capable devices. Holistic understanding of not only usage, but also devices and content distribution, would be needed to explain the market dynamics and to provide all-in-one research products to key customers participating in the Internet ecosystem.

As an example, penetration of certain type of devices affects the distribution of a certain service, either because it is pre-embedded in the device or the app stores (or other content distribution mechanisms) are driving the downloads of that service with that particular device. As another example, it is not enough to understand how many people download certain apps from app stores, but more increasingly it is important to understand the conversion from downloads to actual usage, and further to the money spent by the user in using the service. Further, the popularity of and variety of services available on a certain device can affect the sales of that device due to better perceived functionality, user experience, or through social circles. There are therefore significant feedback loops in this system.

Another prevalent trend is that people not only have multiple devices, but they also use multiple user interfaces, wearable technologies, or attached devices, all working totally or partially supported by a so-called master device. Tangible examples include smartwatches or digital goggles type of devices, which are further attached to a smartphone device. The measurement of activities through those attached devices and wearables, is certainly of future key importance, too. There's thus a need for scalable media measurement solution capable of observational Internet measurements that are better adapted to the modern media environment where complexity and fragmentation of devices, applications, and services have become the norm. Such a media measurement solution would therefore provide a dynamic, high-resolution approach for holistic Internet metering and analytics, integrating metrics around hardware installed base, content distribution, and user behaviors into a single framework, and leveraging best-in-class methods to capture each facet of the online ecosystem. The result yields an integrated and responsive system capable of providing much more than the sum of its parts, and far more than previous isolated solutions

Document "US 2013/198125 A1 (OLIVER JAMES R [US] ET AL) 1 August 2013 (2013-08-01)" studies the behaviour of users "in the Internet", e.g. browsing or downloading content. It discloses an hybrid system combining "panel studies" and "census data". Panel studies recruit users, agree with users to gather their personal data and install measurement tools in the users' devices. Census data is gathered by servers when those servers are visited by users (panellists or not).

Document "US 2013/097312 A1 (MAZUMDAR MAINAK [US] ET AL) 18 April 2013 (2013-04-18)" discloses panel data (several panels are listed as examples) combined with beaconing / cookies / census data can be obtained by "audience measurements" (audience of TV, internet pages, advertising banners, etc.). Data can be matched with data from e.g. Facebook. The Document mentions several panels and panel size, increasing "virtually" panel size, i.e. "virtual panels".

SUMMARY

The invention is defined by the system of independent claim 1, the method of independent claim 11, the corresponding program of independent claim 12 and the carrier medium of claim 13 comprising the program.

The utility of the present invention resides in a variety of issues depending on the particular embodiment in question. The invention provides a feasible solution for combining certain types of user-centric and network-centric data together, whereupon, through an integrated methodology, desired electronic reports and other information deliverables can be conveniently obtained, in which the representativeness and scope of available information is superior to that which is achievable using different data sources separately, and the availability of metrics across hardware and user behaviors is wider than previously seen. The utility of the invention also lies in the ways in which industry players can interrogate such data to inform their tactical and strategic decisions, including decisions around product marketing, marketing campaign design, product features or pricing, or investment decisions as related to individual players in the digital ecosystem.

Further, different embodiments of the present invention enable constructing deliverables to identify market trends, obtain competitive insights, and to learn about new emerging opportunities in the digital market place. The described invention provides a multi-screen framework to timely understand the various characteristics of the digital market place, effectively determining a system that is able to obtain census level data in today's multi-screen world, including mobile devices, and connecting this to novel methods of collecting transactional, behavioral and contextual data from such devices, processing the resulting data through an integrated metadata framework, and providing aggregate market metrics through a unified audience measurement projection calculus.

Yet, various embodiments of the present invention yield solutions economically and technically more scalable than prior art, and are believed to provide more accurate estimations of a wider array of metrics about a wider cross-section of the digital marketplace. Due to its design and reliance on multivalent data sources using diverse user-level data, diverse census-level data, and diverse sample-derived stratification data, the embodiments are usually better able to adapt to changes in the digital marketplace, particularly those observable in prevailing market trends around digital content development, distribution, and usage and device manufacturing, distribution, and usage.

The expression "a number of" refers herein to any positive integer starting from one (1), e.g. to one, two, or three.

The expression "a plurality of" refers herein to any positive integer starting from two (2), e.g. to two, three, or four.

The expression "data transfer" may refer to transmitting data, receiving data, or both, depending on the role(s) of a particular entity under analysis relative a data transfer action, i.e. a role of a sender, a role of a recipient, or both.

The terms "a" and "an" do not denote a limitation of quantity, but denote the presence of at least one of the referenced item.

The terms "first" and "second" do not denote any order, quantity, or importance, but rather are used to distinguish one element from another.

The term "census" refers herein to a system or dataset reflecting the behavior, characteristics, or performance of preferably all members of a given and precisely defined group of measured subjects (e.g. users, services, devices, etc.). This data is explicitly based on all subjects/members of the defined and measured population, though that the defined and measured population may itself naturally be a subset of a larger population.

The term "calibration" refers herein to a process of statistical modeling by which data is weighted to adjust e.g. sample non-response and other biases to better reflect the measured population of users, services, or devices. This process of statistical modeling may involve a variety of statistical techniques well established in the literature, including but not limited to sample balancing, characteristic attribution, characteristic projection, and data integration.

The term "installed base" of devices refers to the information and metrics communicating and reflecting the number, structure, and/or cross-ownership of Internet devices (master and attached devices both preferably included) distributed or in use e.g. in a given market place, among a certain target population.

The term "data set" refers herein to a collection of data elements associated with each other by means of an ontological schema, for instance. The data elements may be physically located as distributed among a number of devices and/or data structures, such as databases or data tables.

Different embodiments of the present invention are disclosed in the dependent claims. Various other embodiments and further benefits of the invention become evident to a skilled person on the basis of the following detailed description.

BRIEF DESCRIPTION OF THE ATTACHED DRAWINGS

Various aspects and embodiments of the present invention are explained in more detail with reference to the appended drawings in which

Fig. 1 illustrates an embodiment of the system in accordance with the present invention from a hardware standpoint.

Fig. 2 illustrates the embodiment of the system with more conceptual and functional approach in contrast to Fig. 1.

Fig. 3 illustrates an embodiment of multi-device usage incorporating a number of master devices and attached user devices.

Fig. 4 provides a more detailed look at the internals of an embodiment of a system in accordance with the present invention with functional/logical and hardware views.

Fig. 5 illustrates different, potentially and likely, overlapping populations that can be measured by different embodiments of the present invention.

Fig. 6 illustrates an embodiment of a web site, or particularly app store, crawling technique that can be utilized in connection with the present invention.

Fig. 7 depicts different aspects of an embodiment regarding the estimation of download statistics, e.g. number of downloads of an app, based on the available information in the form of e.g. app rankings.

Fig. 8 illustrates an embodiment of user device metering and related log file management.

Fig. 9 illustrates one feasible application of context classification/categorization and related associations for use in connection with the present invention.

Fig. 10 illustrates an embodiment of sample review procedure for calibration variable and category selection (collapse) purposes to enable control value determination and calibration of user-level data.

Fig. 11 is a high-level flow diagram of a method in accordance with the present invention.

## DETAILED DESCRIPTION

In modern society device fragmentation is one of the factors changing the way in which individuals socialize, communicate, consume media, and perform personal and professional tasks. Consumers' interaction with digital media and resources has recently become mobile: they use smartphones, tablets, laptops, desktops, etc. to execute such tasks, and many even utilize multiple devices for these purposes on a daily basis.

The framework described here may be embodied as a system that is utilized or is at least capable of being utilized to measure a myriad of characteristics about or around consumer behavior expressed across a variety of digital devices.

Characteristics that can be determined include, but are not limited to, the consumers', or generally users', usage of various devices, the installed base of such devices, user actions, i.e. what the users do with their devices, thus finding out e.g. the ways how users utilize applications (apps) and web sites via these devices, what are the apps, web sites, or media the users download and/or are interacting with, and how these apps, services and content, are distributed to the devices in the first place. Relationship between downloading apps and actually using them may be established. Economic interactions relating to or using digital devices may be analyzed. Differences and relationships in usage across multiple digital devices may be investigated.

The above characteristics may be inspected at varying levels of detail (i.e. across all applications, for various categories of applications, or for specific applications), for various audiences (i.e. user/consumer groups), and/or for different time periods (e.g. on a daily, weekly, monthly basis) as provided by embodiments of the system and method in accordance with the present invention.

By using longitudinal passive metering, the framework described herein is harnessed to measure digital behavior observationally, advantageously using large-scale ongoing samples (e.g. Verto Partner Panels ™) to capture the long-tail of fragmented activity. The obtained data can be calibrated and quality controlled on the basis of a number of substantially independent data sources including e.g. sample-derived stratification data for calibration of demographic distribution, a carefully-stratified longitudinal panel with passive metering for behavioral profiling, and census-data for behavioral calibration and scaling.

One concept underlying the deliverables of the system described herein resides in a capability to bridge e.g. the following three distinct categories of information together:

1: hardware distribution data indicative of the penetration and distribution of different (mobile) platforms and devices, reflecting ongoing changes in the (mobile) hardware market;

2: app (application) distribution & monetization data indicative of the penetration and distribution of different (mobile) applications, data quantifying the revenue generated by sales of these apps and in-app purchases made by users; and

3: app/content usage & engagement - data which shows how consumers interact and engage with (mobile) content (e.g. apps, widgets, web sites).

In addition to, or instead of, mobile platform/device/app related analysis, corresponding analysis concerning substantially non-mobile or unportable devices could be carried out provided that sufficient source data is available.

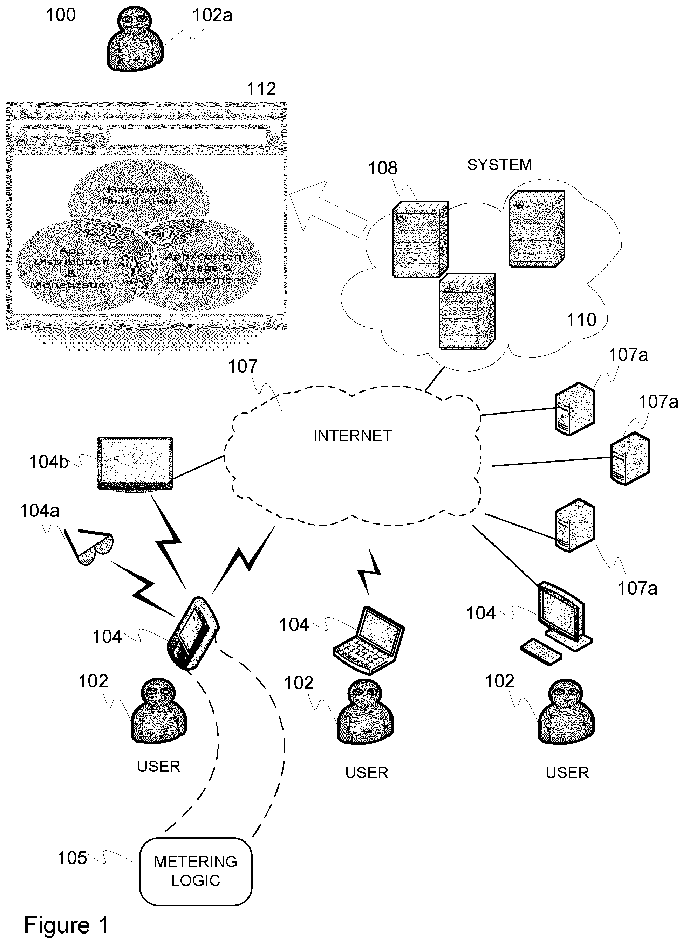

Fig. 1 illustrates an embodiment of a system in accordance with the present invention from both conceptual and device-centric standpoint at 100.

An electronic system 110 containing a number of at least functionally connected servers 108 is provided for activities like data acquisition and analysis regarding the users' 102 (typically persons) online behavior and other activities relative to network connectable, preferably Internet 107 connectable, user devices 104 such as desktop computers, laptop computers, tablets, cell phones and particularly smartphones, attached devices such as various auxiliary devices 104a, 104b (goggle type UI, smart TV, or other UI devices, for instance). Depending on the embodiment and viewpoint taken, the system 110 may be considered to include a number of user devices 104, optionally auxiliary devices 104a, 104b, and further elements, such as data sources, as well.

In addition to user-level data captured utilizing user devices 104, 104a, 104b, preferably via a metering/data collection application logic 105 (software), which may be called as research meter, provided therein, census-level data indicative of the distribution of characteristics amongst the entire targeted population or e.g. a complete and rigorously-defined subset thereof, is obtained from a number of user-independent data sources 107a, such as online services, which may include at least one network carrier, ad network, ad exchange, site or app analytics platform, network gateway, network proxy, and/or content delivery/distribution platform(s) like content management platforms or application stores. Data from these data sources 107a may be provided by the associated digital, network connected devices such as servers by a polling or fetching procedure initiated by the system 110 via applicable application programming interfaces (API), for example, and/or through a pushing mechanism by the data source(s)/server(s) 107a themselves according to predetermined logic, e.g. in response to the fulfillment of a triggering condition, which may incorporate a timer based condition (daily, weekly, or monthly data transmission among other options).

The system 110 is configured to collect, classify, and assemble entities observed in the obtained data into a multi-level categorized ontology by means of an ontological metadata schema and a number of different processing techniques to properly serve the target entities 102a, which may include one or more companies, persons, or basically whatever target parties or customers ordering and/or interested in the analysis results. Namely, these parties will be provided with desired type of deliverable(s) potentially including but being not limited to e-reports in the form of digital files or other representations, advantageously including visual representations, accessible and/or observable via suitable client equipment such as computing equipment and browser running thereon.

Indeed, the UI 112 for accessing the system 110 and/or inspecting the deliverables may include a web-based user interface preferably accessible via a common web browsing application optionally supplemented with tailored add-on module(s) to enhance the use experience. The web-based interface may be configured to allow the user to conveniently monitor the latest or historical data (analysis results), identify changes in the data (trends, etc.) and/or optionally to perform ad-hoc analyses using historical or current data if needed, through the interactive and reactive components of the web-based reporting interface. Additionally or alternatively, the deliverable(s) may be provided via a number of other output channels, e.g. via a number of APIs accessible by the target applications and/or services, or via e-mail.

As the parties' interests may vary, the system 110 is configured to preferably dynamically determine the scope of the analysis and/or of the deliverable(s) according to the client's needs provided thereto via the UI 112. The scope may be limited by the user population, used devices, used applications, application monetization, and/or time factor(s) in addition to other options. For example, the system 110 may be configured to provide a UI 112 that implements at least one user-changeable feature for adjusting the scope of data analysis and/or data representation selected from the group consisting of: filter in terms of e.g. one or more target groups/audiences, selection of one or more metrics to explore, selection of a scope (e.g. device category, device brand, app category, particular app, web site, etc.), and desired time period (e.g. "January 2014") and/or time resolution (e.g. daily, weekly, monthly, etc.).

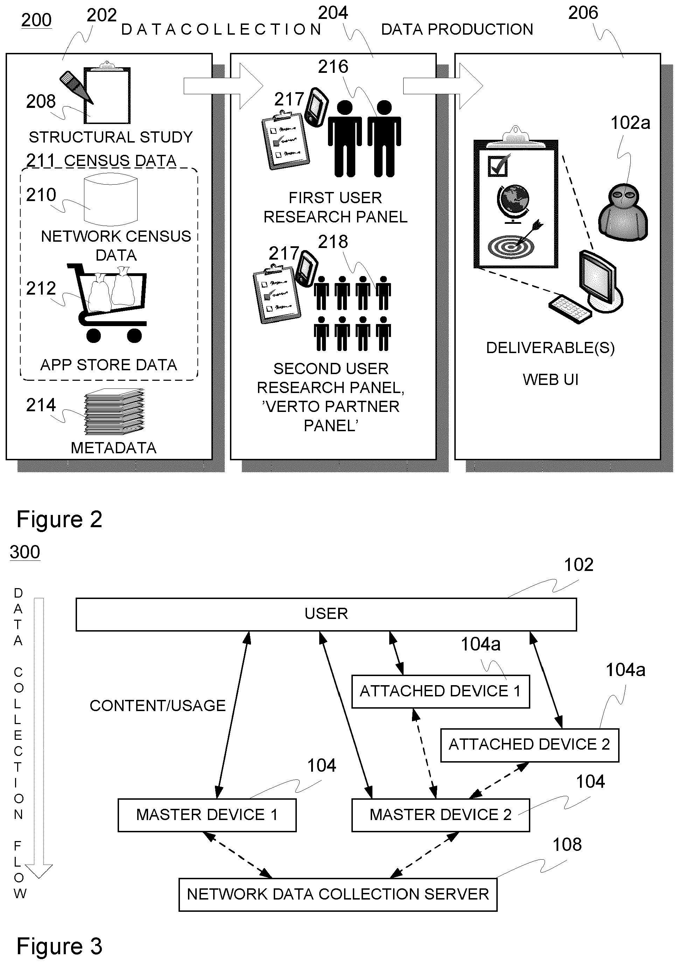

Fig. 2 represents, at 200, an embodiment of the system from more conceptual and functional standpoint. General data (processing) flow is indicated by horizontal arrows in the figure between data collection activities and production/output activities.

At 202, a structural study 208 is indicated as one information source to be utilized as a basis for data calibration in the system, for example.

Preferably, the structural study 208 is or incorporates an independent survey to provide an independent basis, potentially together with census data 211, for a number of actions such as determining desired panel stratification (i.e. quotas) for the recruitment of the (first) research panel 216, and calibration of the resulting data collected during the data collection process 202 and collected or assembled during the data production process 204. The structural study 208 may be carried out as an offline study to maximize its coverage/representativeness, for instance.

The structural study 208 is designed to outline the basic statistical assumptions that describe the population researched. The structural study 208 may be used to answer (conceptually) e.g. the following questions:

- What are the device ownership characteristics of the desired market's (e.g. certain country, state, region, or other geographical area) (adult) population?
- What are the socio-demographic characteristics of the measured device owners?

The structural study 208 could be implemented by the party who will also implement the system described in this invention, or alternatively in certain implementations of the methodology, the study 208 can be licensed or commissioned from a reputable and credible market research vendor, or other social researcher applicable. There are a variety of research methods which can provide data sufficient to satisfy the requirements listed above, and which can readily be licensed or commissioned from third party research vendors.

The census data 211 may incorporate network census data 210, which may be obtained through network traffic or network activity monitoring, for instance, and specifically e.g. app store data 212. Preferably, census-level data describes a variety of subjects, which in some embodiments may include devices, users, services, applications, or web sites. Each dataset included in the census data shall thus provide either aggregate or case-level characteristics and information about the entire population to which that particular dataset applies. The census data 211 may be used with the structural data 208 to calibrate the data collected in the data collection process 202 and the data collected or assembled in the data production process 204.

The metadata 214 is, incorporates, or defines an ontological data set which is utilized to define entity taxonomies which serve to categorize entities (e.g. mobile devices, operating systems, visited web sites, applications, etc.) discovered or observed during the data collection process 202 and data production process 204. This data may be used to:

- group related data items into categories as needed during the data production process 204, and/or
- obtain categorically-organized data in the deliverable(s) 206.

The research meter 217 may be embodied as software which is obtained, optionally downloaded to, and installed on digital devices (e.g. computers, smartphones, tablets, etc.) to monitor and log activity thereon. It may basically act as a primary source of data for the system and framework described in this invention, and its data will be used to collect

- observational data about the behavior/activity of devices monitored in the first research panel (see below) 216, and/or
- observational data about the behavior/activity of devices monitored in the second research panel 218, e.g. the aforementioned Verto Partner Panel ™.

Now finally considering the panels 216, 218 in more detail, the first research panel 216 is preferably a passively metered panel of digital device users, which shall be recruited preferably using one selected and defined method. In some embodiments, this method may involve techniques such as CAWI (computer-assisted web interviewing) facilitated through pop-up intercepts, online access panel(s) invitations, opportunistic registration intercepts, CATI (computer-assisted telephone interviewing), CAPI (computer-assisted personal interviewing), or other commonly-utilized and well established research method(s).

Panel composition shall be advantageously determined based on targeted quotas derived from the structural study. Panelists will have the research meter 217 installed on their digital devices, and the research meter 217 will subsequently passively monitor their behavior. Passive metering generally refers to technology where the software tracking the activities of the user, or contextual parameters, at least to a significant extent runs on the background of said devices, without the need for users to interact with that software separately. In the installation of these software meters to digital devices, users may need to complete installation-related steps. One software meter running on such a device, may in some embodiments also yield measurement data on a number of other digital devices, for example the ones that are functionally attached to the master devices and thus communicating therewith optionally wirelessly.

One purpose of the first research panel 216 is to provide a high-quality (i.e. highly controlled, finely calibrated) source of data for consumer behavior. The size of the research sample will provide for a limited data depth (i.e. limited availability of long-tail data), however the panel will specifically provide high-quality data for those subjects (e.g. apps, web sites, device manufacturers, demographic groups, etc.) whose audience/users is sufficiently large, if implemented carefully.

In detail and depending on the embodiment of the research meter 217 and upon completion of the data production process 204, the panel 216 may be designed to provide high-quality data answering e.g. the following questions:

- What are digital device usage and penetration rates among the consumers of a certain market?
- What resources (e.g. applications, web sites, media) do consumers interact with on their digital devices?
- How do consumers interact with top resources (e.g. applications, web sites, media) via their digital devices?
- For what, when, how, and in what amounts do consumers spend money on digital devices?
- How do the above questions vary across devices when considering consumers with multiple digital devices?
- What are the trends in app/content distribution, usage, replacement, and/or incremental usage?

The data from the panel 216 may form or be used to form one primary deliverable 206, and will shape the form of output data derived based on the second research panel 218 (e.g. Verto Partner Panel ™).

As mentioned herein, the panel 216 may be recruited based on a set of stratified quotas and the panel stratification may be determined based on the results of the structural study 208.

Before being invited to participate in the first research panel 216 (i.e. before entering the sampling frame), a respondent shall meet a number of basic criteria, which may include different requirements regarding e.g. the respondent's age and residency, device/network ownership or accessibility, survey participation history, etc.

Panelists participating in the panel 216 may be compensated in a desired fashion. The mechanism of gratification and the processing of incentives for each particular panelist shall be determined in collaboration with the sample vendor who originated such a panelist. The incentive may be digital and allocated digitally, such as access or elevated access/user rights to digital content, services, apps, etc.

The second research panel, e.g. Verto Partner Panel ™, 18, is preferably a passively-metered panel of digital device users most advantageously recruited via convenience sampling. In some cases the recruitment may be indirect considering e.g. scenarios in which the research meter 217 is included as embedded in certain end-user facing apps that users download primarily for purposes other than participating in the research study. The panel will consist of or contain users who have:

- installed the research meter 217 bundled with one or more mobile applications;
- provided the system with their demographic profile data; and/or
- agreed to provide anonymous data to the system.

Because the composition of the panel is, by default, substantially uncontrolled (i.e. "basically all are welcome") or almost uncontrolled, the role of the panel 218 is in developing an extremely large sample capable of providing a deep level of long-tail data. The panel 218 may be specifically configured to provide supplemental data for a large number of subjects (e.g. apps, web sites, devices, etc.).

And because the demographic and behavioral representativeness of the sample is uncontrolled in view of the foregoing, the data thereof will not be used to calibrate other data. Instead, the data from the panel 218 is itself calibrated during the data production process 204 with data that is more representative and controlled by nature, such as data from the first research panel 216, and other data collected in the data collection process 202.

Concerning the panel's 218 philosophy and related technical features in more detail, because the subjects that the framework described herein is aimed to report on are so fragmented, it is, in practical circumstances, impossible to provide complete/in-depth data on digital behavior without an extremely large sample size. Recruiting an extremely large sample using the rigorous procedures designed for the first research panel 216 (see above) would be prohibitively costly on a per-panelist basis. Therefore, the first panel 216 will be supplemented through the development of the second panel 218 preferably recruited on a convenience (uncontrolled, or 'catch-as-catch-can') basis.

The panel 218 is preferably not size-limited. However, in some embodiments, data from the panel 218 may only be included in the deliverable(s) 206 when the number of panelists selected through an applied quality control and validation process exceeds a predetermined number, e.g. 20 000 (twenty thousand).

In preferred embodiments, the composition of the second panel 218 will not be controlled a priori, but validation statuses are advantageously designed so as to sub-select relevant respondents for inclusion as validated (in-tab) panelists post factum.

The panelists of the second panel 218 may be recruited from a population of mobile device users (i.e. users of iOS, Blackberry, Android, and/or Windows Mobile devices, for example). For instance, the specific source of panelists may be those users that have installed one or more mobile applications that are integrated with the research meter 217, or e.g. research SDK (software development kit).

Every user who has installed an integrated app may, in principle, be invited to participate in the second panel 218. The invitation may be provided via the app itself, using e.g. a visual message. This participation is based upon the user's voluntary opt-in. However, for regulatory and ethical requirements it may be necessary that alongside the opt-in the user indicates their year of birth as a pre-qualifying characteristic (e.g. users below 18 years of age will automatically be opted-out).

Recruitment survey may be executed to collect basic / minimal data about the respondent so as to appropriately weight their data. Basic demographic information collected in the panel's 218 recruitment survey could include e.g. device type, mobile carrier, gender, education, geographic location, household size, etc.

This information to weight megapanelist's data may be technically derived from a number of sources optionally automatically utilizing e.g. the software-based observations, or integrating selected 3rd party to describe the panelists, or using some form of pop-up or questionnaires to actualize this for the panelists.

The deliverable data 206 is the final output of the system described herein, but obviously the customer 102a receiving it may cultivate it further e.g. with proprietary tools, etc., if a need arises. Deliverable 206 contains calibrated, processed, and categorized information e.g. on device usage, app/service usage, and user behaviour, which will be made available in whole or in part to the customers optionally via a web-based user interface. Alternatively, e.g. a native app could be utilized to consume the information.

The deliverable(s) 206 may be embodied as a single, unified database on the backend, for example. However, each customer may be assigned specific user rights to access limited portion(s) thereof through the available UI(s) such as a web based interface.

For instance, the deliverable(s) may include at least one element selected from the group consisting of: hardware distribution, content distribution, app/content usage & engagement, and app analytics.

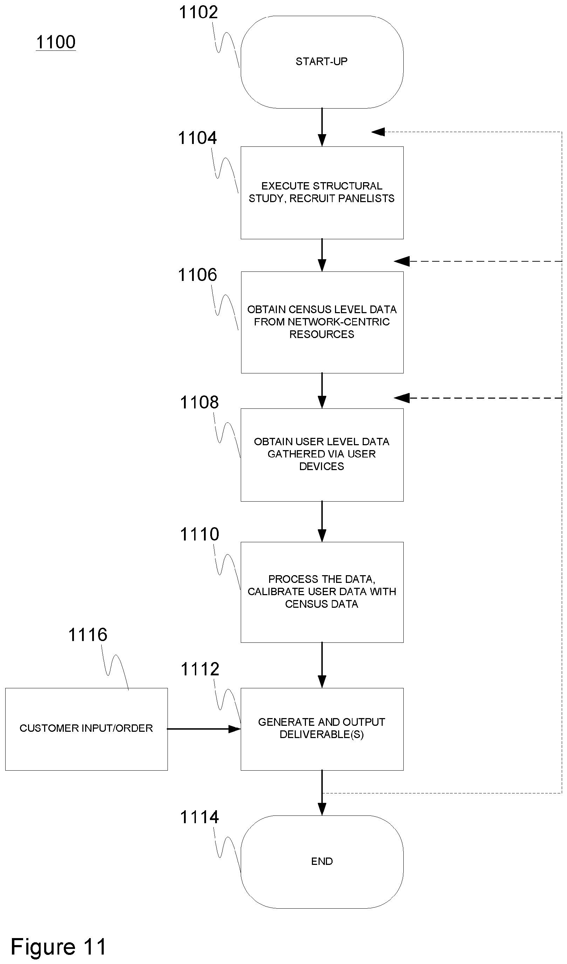

Figure 11 shows a generic flow diagram 1100 of an embodiment of a method in accordance with the present invention involving the afore-explained themes and features.

At start-up 1102, the system is ramped up, which may refer to the acquisition and configuration of related hardware and software. The system may include a number of server devices, optionally disposed in a cloud computing environment, for example. Yet, 'silent' recruitment of panelists for at least the second user panel may have already been initiated already at this stage e.g. via convenience sampling, and related measurement, logging and reporting software be delivered to a multitude of user devices, such as mobile terminals or other terminals, preferably as bundled with other software. Still, e.g. the suppliers of census-level data may be selected and necessary data communication channels established.

At 1104, the structural study is executed to determine the stratification (quotas) of the first research panel, properties of the measured universe (demographics, etc.), which shall be used for calibration of panel data, etc. Recruitment of the panelists, especially for the first panel 216, may be then executed accordingly.

At 1106, census-level data is obtained preferably from a plurality of sources such as app stores, network data suppliers, etc.

At 1108, user-level data is received from the panelists.

At 1110, data processing takes place including organizing the data. Calibrating the user-level data e.g. with sample-derived stratification data (from the structural study 208) and/or census-level data takes place as described in further detail hereinafter.

At 1112, the deliverable(s) based on collected census- and user-level data are constructed. Item 1116 refers to customer input that shapes the content and/or form of the deliverables (such input may be received and taken into account by the system at various stages of the process, although being indicated in the figure not until item 1112).

At 1114, the method execution is ended.

As indicated in the figure by the various dotted loopback arrows, the execution of items may be and typically is repetitive and/or iterative as being clear to a person skilled in the art on the basis of this disclosure. Also the execution order may vary depending on e.g. the availability of new data and also parallel or alternate processing of items may and typically will take place in real-life implementations considering e.g. potentially iterative calibration for the user-level data.

With reference to Fig. 3, at 300 an embodiment of feasible multi-device approach to be utilized in connection with the present invention is depicted. Generally, communication between the user 102 and his/her devices 104, 104a is illustrated with solid lines and the communication between devices is indicated with broken lines. Indeed, in preferred embodiments of the present invention, multiple devices of a single user can be tracked, even though one or more of those devices cannot, or will not, be configured to execute at least full-scale software or hardware based data collection technologies for practical reasons. In particular, the system is preferably configured so that even though the users 102 interact with attachable or wearable devices or external user interfaces (examples being smartwatch devices or digital goggles type of digital screens), the related measurement data can be collected. In these cases the system utilizes so-called master devices 104 in between, to which such attached devices or user interfaces 104a connect, to perform one or more of the following functions:

1. Track traffic, signals, or other events that take place between the attached device(s) 104a and master device 104.
2. Poll passively (based on e.g. some contextual event triggers) or actively (based on predefined intervals, for example) the application programming interfaces (API) of the attached device(s) 104a in order to collect measurement data.
3. Store the collected measurement data in the master device temporarily or for a pre-determined duration of time.
4. Send the data to network based data collection server 108 of the system for the purposes of analyses.

Preferably, the master device is configured to track, store and send the data such that data originally concerning a particular device (either the master device itself or any attached device) can later be traced back to the same device. In a feasible implementation, while the user may have a certain user identification code or number (ID) assigned to him/her, each of the devices, does not matter if they are master 104 or attached (slave) devices 104a, have their own unique device identification number as well, even though some of them might be connected to each other.

This kind of implementation will make it possible break the obtained usage data down into different devices and user interfaces among other potential benefits during the analysis phase. Furthermore, in certain implementations, the engine handling the tracking/measurements, which may reside in a master device or in a remote server, in addition to assigning e.g. user ID numbers and/or device ID numbers (corresponding to the master devices), may be configured to assign or register user interface IDs to user interfaces/attached devices connected to the master device 104.

Indeed, in the implementation where measurements are to a significant extent executed and led by the master device 104 (for example that device being used as the data storage and a gateway towards the network, and to handle the identification/registration of the different user interfaces being used), but engagement and user actions may take place through an attached, tethered, slave device 104a, e.g. the following technical steps may be performed:

1. New or existing user interfaces are registered by the master device as being connected to the master device, either through dynamically listening to new connections, or alternatively, by polling periodically information about paired or connected devices, for example;

2. Status information, preferably including a heartbeat (device is being turned on, even if there is no active engagement with content, services, apps, taking place), is tracked for each device.

In the system described herein to track multi-device or multi-UI behaviors, the master device 104 shall advantageously log events and other measurement data, potentially including screenshots, centrally, without burdening the attached device 104a with these activities. The master device 104 may be configured to use either available widely used APIs and other function calls to collect this data, or alternatively/additionally in some implementations it could track more fundamental signaling traffic channels, HTTP data (as the main device being used as a kind of network gateway), or other stack or lower-level APIs.

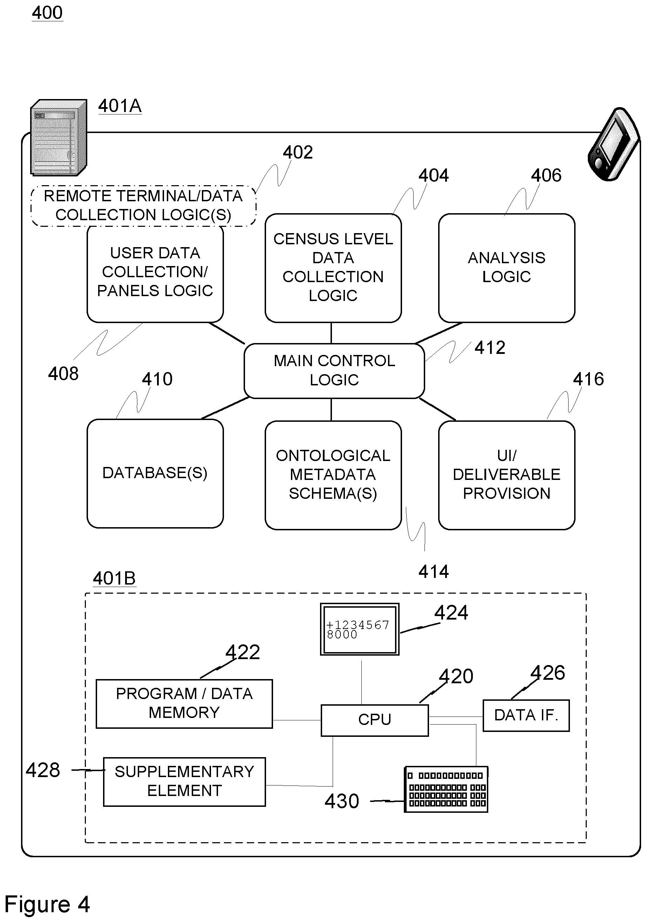

With reference to Fig. 4, the internals of an embodiment of a system 400 in accordance with the present invention with functional/logical 401A and hardware standpoints 401B are shown therein.

Item 412 refers to main control logic that takes care of data acquisition from various sources, data transfer between different entities, configuration management, etc.

Item 410 refers to a number of data repositories such as databases for storing the data collected and processed.

Item 414 refers to ontological metadata schema(s) utilized for organizing and categorizing the data into a multivalent data set.

Item 416 refers to UI for outputting the deliverable(s) containing the integrated, categorized multi-level data obtained by processing and analyzing the collected user level data and census level data.

Item 408 refers to user level data collection logic(s) at the system or server end, whereas item 402 refers to a research meter 217 or (research SDK), i.e. logic taking care of data metering, logging, potentially processing, and forwarding on user devices and e.g. in connection with online/mobile services. Preferably the logic is prepared such that it can be easily plugged into any online or mobile service, or app, and as people use those particular services or apps, the logic is then activated in the background, running measurements, and being able to send measurement data to server(s) of the suggested system. All this may take place without necessarily providing any interfaces or configuration possibilities to the "host app" to affect how the logic works. In some implementations, however, there can be a number of selected "feedback loops" built into the logic module, so that it may provide signals, data, or something else, back to the host app.

A list of apps integrated with the logic 402 will be maintained preferably at all times for oversight/management purposes. Every (mobile) user who installs an integrated app may be given the opportunity to participate in (opt-in to) the second research panel 218. This population of users who have installed an integrated app may thus establish the sample frame for the second panel 218.

Item 404 correspondingly refers to census-level data collection logic. Although not explicitly indicated in the figure, also in this case research SDK or corresponding data collection entity installed at a remote entity, e.g. at the servers running and/or hosting an online service, may be applied for data collection purposes.

Item 406 refers to data analysis logic configured to verify, combine, calibrate, process and organize the collected data utilizing e.g. the schema(s) 414 to obtain the desired kind of deliverables for output via the UI 416.

Hardware-wise 401B, each of the applied devices such as server(s) and user device(s) (both master devices and attached devices) may include a number of processing devices 420 such as microprocessors, microcontrollers, signal processors, etc. for processing instructions and data. Further, they may contain memory (chips) 422 for storing program instructions and other data such as collected user-level and/or census-level data, processed data, ontological schema(s), deliverables, etc.

Data interface 426 may refer to a peer-to-peer interface or network interface that may be wired or wireless, for instance. A server type device may typically contain a (wired) network adapter with e.g. Ethernet or other LAN type connectivity means, whereas a mobile user device may typically contain a number of wireless transceivers, e.g. a cellular transceiver (e.g. 3G) and/or WLAN (Wireless Local Area Network) or Bluetooth transceiver, for accessing the Internet and/or communicating with near-by other devices. Also a tag reader (RFID (Radio frequency identification) or NFC (Near-field communication), for example) may be included. UI may comprise a display 424 and data input device 430 such as a keypad, keyboard, touch interface (touchscreen, for example), etc. Yet, the devices usually contain various other elements 428 such as one or more sensors, power supply components, casing, etc.

Program code (software) for carrying out method steps and generally procedures described herein by a number of computer devices, may be generally provided on a carrier medium such as memory card or optical disc, or transferred over a wired or wireless communications medium.

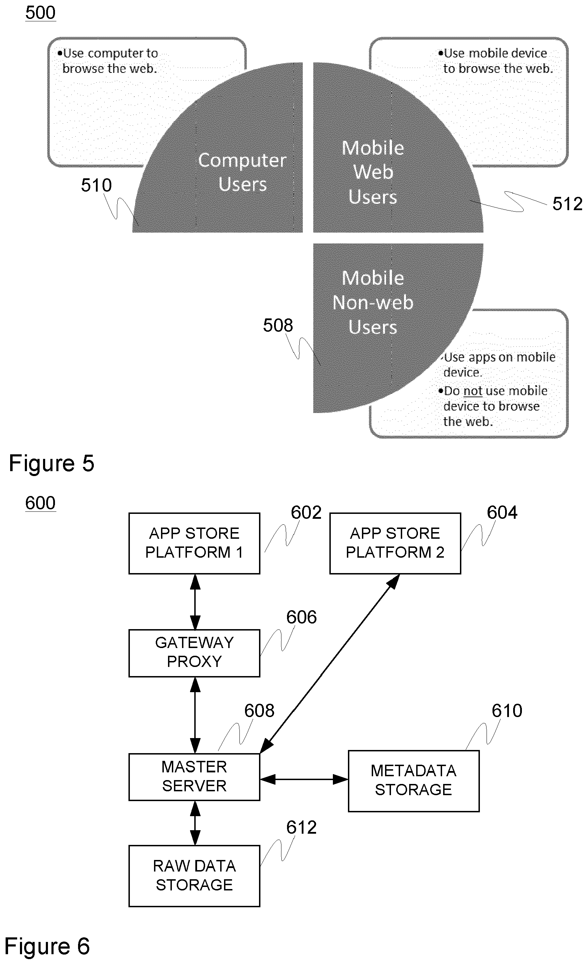

With reference to Figure 5, relationships between different potential populations measured via the census data 211 are shown at 500. Namely, data that is included in the census data 211 may be sub-divided into independent and unrelated data sets each of which reports data about a particular subset of the overall user population (either "Computer Users" 510, "Mobile Web Users" 512, or "Mobile Non-web Users" 508).

The aforementioned three populations are likely to overlap: an individual may simultaneously be a computer user, a mobile device web user, and a mobile device app user. However, different census data providers will usually have different reach amongst each of these three sub-populations.

In order for the census data 211 to provide credible data for use in calibration, census data vendors are preferentially selected such that simultaneously the reach among each of these three populations is maximized (preferably approaching 100%), and the likelihood that a particular user is double-counted across the census data vendors is minimized (preferably approaching 0%).

In practice, one way to credibly approach 100% reach across all three measured sub-populations is to combine multiple census data sources. However, because it is necessary to minimize the likelihood that a particular unique user has been double-counted, audience overlap between these census data sources must be minimized a priori. It is recommended that one implementing the system of the present invention carefully selects census data vendors so as to accurately determine their reach and overlap in and across each sub-population measured.

The census data is preferably processed and compared on a timely basis (e.g. monthly) against other sources of data, for calibration purposes, and to adjust the correction calculus so that the published estimations e.g. about the number of devices in use, or new devices activated, are as close to the true numbers as possible.

The census data may be sourced in a raw level format, including for example a table disclosing, for each field communicating about the type of the user or device, the nominal or relative number of unique users seen during a certain time period, and/or the nominal or relative number of actions observed during a certain time period e.g. for a certain country.

In some embodiments, the system may be configured to utilize raw level strings in the provided raw level information to identify the user type, device type, and used app, automatically or semi-automatically (e.g. with human curation). The raw level strings may include, for instance, alphanumeric pieces of data serving as identifiers. Similarly, based on e.g. any device related IDs, such as serial numbers, temporal or permanent, unique number of devices may be counted for any device and/or app-specific part of the census data.

In some embodiments of this invention, the panels 216, 218 may be recruited without technical means of controlling behavioral bias in their respective sample stratifications.

While the structural study 208 provides for some measure of demographic control and calibration, its declarative basis renders its behavioral value somewhat meaningless for calibration of the panels' 216, 218 behavioral representativeness.

In some cases, the census data may contain particular data points reflecting the behavior of an entire defined sub-population of users, devices, or services. Such census data may be used so as to calibrate any inadvertent behavioral bias resulting from the aforesaid inability to incorporate behavioral characteristics into the respective panels' 216, 218 sample stratification. One example of census data which can provide census-level behavioral data for use in calibration is census-level information about applications available in mobile application stores (app stores), which is represented as app store data 212.

Switching over to Fig. 6, the app store data or similar data can be cleverly collected by robot(s)/crawler(s) programmed to scan publicly available or proprietary interfaces e.g. periodically, the embodiment of which is illustrated in the figure at 600.

E.g. on a daily basis (once every 24 hours), the system of the present invention may be configured to connect to the monitored app stores or other more or less corresponding content delivery/distribution platforms, optionally via suitable API(s), and iterate through each application listed in the app store. Regarding each application, it may be configured to record e.g. one or more data points such as the app store in question, a timestamp, the name of the application in question, etc.

Regarding each application, it may be configured to record e.g. one or more of the following data items:

- App Store. A unique identifier that indicates the app store from which data was collected.
- Timestamp. A UTC timestamp indicative of when the data was collected from the app store.
- Application Identity. The ID code or name (or other unique identifier) of the application in question.
- Information about the position of the app in the ranking list(s).
- App Category. Data describing how the application is categorized.

The app store crawler may have a master server unit 608 that is able to store data into a raw database 612, and access metadata storage 610, which contains information about already scanned and categorized apps, and e.g. the status of the app store crawler.

Then, the app store crawler may be configured to utilize several different user accounts and/or other emulator-oriented features to "pretend" to be or emulate a particular wireless device or particular user, for example, and/or by using either proxies/VPN tunnels 606, or by directly accessing app store APIs (sometimes public, sometimes private), request information either in patches or one by one, from the different app store instances 602, 604 e.g. in different countries, and thereby fetch the relevant data to the platform. The system may be thus designed to use emulator-oriented features and/or other technologies, like selected tunneling and dynamic IP address schemes, to effectively crawl app store APIs of different vendors, countries, and localizations.

Because none, or at least not all, of the available app stores typically publish (publicly) the factual number of downloads for each application, the number of downloads may be estimated based on a variety of data points collected for each application, such as but not limited to country-specific application rankings, user ratings scores, etc.

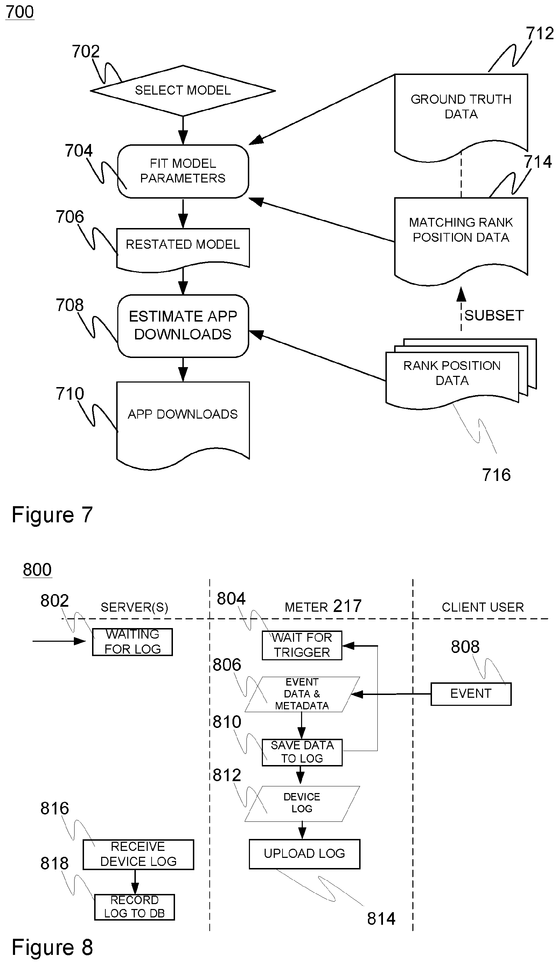

Fig. 7 depicts, at 700, different aspects of an embodiment regarding a novel estimation technique of download statistics, e.g. number of downloads, based on available information in the form of e.g. rankings and/or ratings (concerning the target entities of the estimation). By this solution, it is, among other uses, possible to produce estimates for a comprehensive set of apps.

Many app stores, such as iTunes ™ and Google Play ™, do publish some sort of top lists and e.g. ratings for smartphone applications, but they do not publish, at least comprehensively, the actual download numbers of different apps. The download information, however, would be of great interest to many players in the mobile app market, from app developers to market researchers. Preferably, there is still ranking information publicly available about apps in a number of sources such as the aforementioned app stores. To estimate the number of e.g. daily downloads for apps listed in an app store using publicly-available information about each app, and relying on, among other factors, the ranking position published for each app by the app store(s) in question, a number of approaches are next described hereinbelow.

Prior to proceeding with the further details, it is first of all assumed that a well-defined mathematical relationship between rank position in a given app store and the number of (daily) downloads actually experienced by a given app indeed exists, and that rank position data is available. Yet, a set of ground truth data is required in determining a number of model parameters.

Use of a mathematical model to estimate downloads per desired time reference, such as the aforementioned daily downloads taken herein as an example, is thus enabled by the (daily) rank position data obtained e.g. from app store(s) for a given set of apps and a number of properly determined model parameters derived e.g. from an independent source of ground truth data.

Regarding the model itself, a simplistic power law model has been previously suggested, but there are a number of other options providing varying degrees of accuracy when benchmarked against ground truth data. In particular, the following models are set forth:

*Exponential:*

$$d(r) = a * \exp(b * r)$$

*Log-normal:*

$$d(r) = a/r^b * \exp(c * \log^2(r))$$

*Power law with exponential cut-off:*

$$d(r) = a/r^b * \exp(c * r)$$

*Lomax:*

$$d(r) = a(1 + b * r)^c$$

wherein *d(r)* refers to (daily) downloads and *r* to the rank. While the proposed exponential model has only two parameters, the remaining models have three parameters which allow for the modeling of more complex relationships. For example, the log-normal model includes the following parameters: scale parameter *a,* and shape parameters *b* and *c* which determine the steepness and the curvature of the model.

The method proposed involves the following steps:

1. Assume a model 702. In the first step of the method proposed, assume the mathematical model that should apply. E.g. the aforementioned *exponential, log-normal, power law with exponential cut-off,* and *lomax* models may be (and preferably are) considered.

2. Fit the parameters 704. Given the model assumed, use external data 712, 714 such as known rank position and download data to fit the parameters to the model in order to obtain restated model 706. This process may be facilitated by converting the models into their logarithmic versions:

*Power law:*

$$\log(\mathrm{d}(r)) = \log(\mathrm{a}) + \mathrm{b} * \log(\mathrm{r})$$

*Exponential:*

$$\log(\mathrm{d}(r)) = \log(\mathrm{a}) + \mathrm{b} * \mathrm{r}$$

*Log-normal:*

$$\log(\mathrm{d}(r)) = \log(\mathrm{a}) - \mathrm{b} * \log(\mathrm{r}) + \mathrm{c} * \log^2(\mathrm{r})$$

*Power law with exponential cut-off:*

$$\log(\mathrm{d}(r)) = \log(\mathrm{a}) - \mathrm{b} * \log(\mathrm{r}) + \mathrm{c} * \mathrm{r}$$

*Lomax:*

$$log(d(r)) = log(a) + c * log(1 + b * r)$$

3. For each target app, construct the downloads estimate 710 utilizing 708 the restated model. Having fitted the parameters to the model, apply e.g. one of the two algorithms described below to estimate the number of downloads for a particular app, depending on the external data 716 available.

Algorithm 1 refers to situations wherein current (daily) data is available. When the external (ground truth) data is daily in nature and currently available for a sample of apps, it is possible to estimate the number of downloads for an app outside of this sample with a given rank r using any one of the parameterized/fitted models described above. The process for implementing this algorithm may take the following steps:

1. For the model selected, estimate the value of all parameters other than r by assuming values for *r* as taken from the external (ground truth) data and using the logarithmic version of the applicable model to estimate the remaining parameters.

2. Restate the original model selected, applying the estimated parameter values from (1) in place of the parameters indicated in the model.

3. Given an app with rank r in a given day, the number of downloads of that app in that given day can then be estimated by calculating the formula determined in (2).

Algorithm 2 refers to scenarios in which there is a discontinuous availability of external (ground truth) data, such that initially there is daily data available and subsequently there is only monthly data available. Then it is still possible to estimate the number of downloads for an app with a given rank r using any one of the parameterized/fitted models described above.

The procedure for implementing algorithm 2 includes:

1. Estimate shape parameters as applicable by calculating the average of the appropriate parameters over a daily model prepared based on the daily data for the time period when that daily data was available.

2. Estimate the scale parameter $a$ by:

(a) Taking the highest values of downloads as seen in the external data for the previous two months, and;
(b) Dividing each value from (a) by 30 to determine a linear estimate of the number of daily downloads for each day of the previous two months, and;
(c) Using the values from (b), linearly extrapolate the number of downloads $d$ for the current date (or the date in question). Based on $d$ and if needed shape parameters from (1), estimate parameter $a$.

3. Restate the original model formula selected, applying the parameter values from (1) and (2) in place of the parameters in the model.

4. Given an app with rank $r$ in a given day, the number of downloads of that app in that given day can then be estimated by calculating the formula determined in (3).

With reference to Fig. 8 and scenario depicted at 800, the research meter application logic 217 running at user devices is configured to provide a passive way of observing/recording panelist usage of digital devices. It is specifically meant to passively observe, record, and upload 814 a log 812 of panelist activity to the server(s) of the system for storage and analysis 816, 818.

The metering logic 217 resides in the metered device's memory. When a particular event 808 on the device occurs, the meter 217 is triggered 804 and information about the event logged 806, 810.

Log file management and transfer may adhere to one or more of the following rules and procedures:

- Each log file is fingerprinted to a particular panelist and specific metered device,
- Log files are stored locally on the metered device,
- Log files will be compressed locally on the metered device using a relevant compression algorithm,
- Log files are transferred asynchronously to a 'waiting' (802) remote server based upon the availability of an internet connection,
- To minimize impact on device performance, log transfer will initiate only when an internet connection is available, and/or
- In the event that no internet connection is available for an extended period of time, up to predetermined amount, e.g. about 10 MB, of log files will be stored locally on the metered device.

The data collected by the metering software 217 may be divided into multiple, e.g. three, conceptual categories:

- Event Metadata: This is information that describes the context for the event and is preferably identical across every type of event registered by the research meter;
- Event data: This is information specific to the logged event, and its contents may vary depending on the type of event that has been logged; and/or
- Heartbeat data: This is information which informs the system that the panelist/device remains "active" and connected to the Internet.

Event data logged by the meter 217 will be preferably centrally processed by the server(s) of the system in order to

a) clean the data,
b) connect event metadata, where necessary, to underlying events,
c) map identifiers to the relevant entities, and/or
d) calculate metrics from the logged data.

Every event that is logged by the research meter 217 will preferably log at least some of the following meta-data, for example:

- Panelist / Device ID. This is a unique identifier which identifies a particular panelist and a specific metered device (panelist/device fingerprint).
- Timestamp. This is a UTC timestamp that indicates when the event occurred.
- Geolocation. This is technical information about the Client User's geographic location when the event occurred. If this can be captured at the level of geographic coordinates (through either onboard GPS or wireless location software), that would be ideal. This data point may accept a value of "Unknown".

The meter 217 may be configured to utilize an external server to collect a number of selected data points, preferably still always related to the on-device meter running in the device itself. An exemplary setup of such an implementation will be a VPN or proxy server, through which all or some HTTP data could be directed and separately logged.

The on-device meter 217 may initiate this type of a profile setup through which the external server can be used for such data logging purposes, and the on-device meter 217 will actively complete at least one of the following two items:

1. Authenticate and identify the user, by using a customized profile setup or fingerprints hidden in the traffic, to facilitate the identification of the panelist, or device, and making it comparable/relational to the data that the on-device meter itself is collecting directly.

2. Matching time-stamps, by using some syncing or hidden traces, or proactive HTTP packet transfer, to generate a process through which the timestamps of on-device metering data and data collected at an external server, can be matched perfectly (this involves the creation of so-called offset values between the on-device and external server logging).

One additional feature of the meter 217 is a so-called context data handler, which is configured to add contextual information to any logging activity, regardless of the logging activity taking place in the research meter itself or at a separate server. This context handler may be configured to add location information, device performance information, and/or screen status information to any measurement. One practical purpose of this feature is to add information about the user activity and screen status, to data collected from external (more dummy) servers, like VPN or proxy servers. Thereby, active use traffic can be separated from background traffic activities in any device - active use meaning that the screen is on and the user is doing something active with the device.

The amount of information logged for different events depends on the nature of the event being logged. The events collected can be related to application usage, Internet page requests, placed voice calls etc.

In its raw form, data collected by the meter 217 will be extremely granular and may encompass many thousands of web sites, mobile applications, operating systems, user-agents, and mobile devices. The granularity of this data creates two separate problems in the data production and data delivery process:

- Alignment of data granularities. Data that is essential to the data production process (i.e. structural study data, app store data, HTTP data) is not collected at the same level of granularity as data collected by the meter 217. In order to calculate and apply scale/proportion factors derived from these components, the highly-granular data must be categorized so as to align with less granular data sources.
- Customer experience. In order for customer deliverable to be navigable and readable, it is important that the customers are provided with the ability to browse and search for the specific entities (i.e. web sites, mobile applications, operating systems, user-agents, mobile devices) that interest them. While a search experience can support highly granular data, a browsing experience of deliverables etc. via the system UI cannot: it would be impossible to find specific entities amongst the tens of thousands of entities contained at a granular level.

One feasible way to effectively address both of these issues is to develop a system for managing metadata 214. The metadata that will reside within the metadata management system will be used during the data production process and will be essential to producing the final set of deliverable data.

The aforementioned metadata 214 is used to categorize/organize the entities that are observable e.g. within the research meter log files, the app store data 212, the census data 211 in general, and/or the structural study data 208. Because the framework described herein encompasses a variety of conceptual entities, it shall simultaneously support a variety of ontological schemas. In general, these schemas can be divided into two disparate categories:

- Univalent Schema. Entities included under a univalent schema have one canonical categorization method. Their hierarchy is canonically defined by e.g. the system staff managing and updating the system and related logic(s).
- Multivalent Schema. Entities assigned to a multivalent schema will have multiple canonical organization methods. Clients in different audiences will likely have different approaches to entity categorization depending upon their particular business needs. Each multivalent schema shall be its own organization method and shall be deemed canonical according to the editing rules defined by staff members.

Because many of the entities measured by the framework described herein are multivalent in nature, this means that there will be several different canonical schemas according to which the system described in this invention publishes its data.

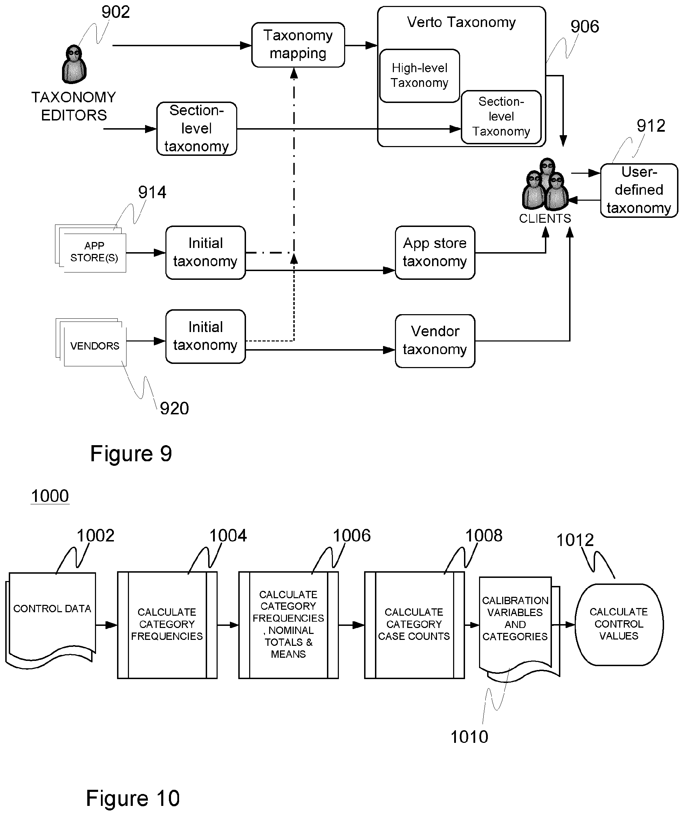

With reference to Fig. 9, each of these schemas may be derived from one or more sources as implied in the figure. Taxonomy editors 902 may include e.g. the entity implementing the overall methodology. One or more schemas developed and maintained by the system staff using e.g. a custom-built meta-data management system could be assumed as the "default" canonical schema. Yet, e.g. app stores 914 and technology vendors 920 may provide categorization schemas considering e.g. the fact that applications available in app stores have been typically categorized by their developers/the app store itself. System taxonomy 906 may be established. Still, end-users of the provided reporting tools, for instance, may define their own taxonomies and categories 912, through the application of which data is then presented to them.

Generally, in the context of the present invention, provision of reliable, objective deliverables on the desired topics further requires both validating the panel data and calibrating it utilizing the available means.

Therefore, preferably automatically upon receipt of panel data, the system is configured to pre-process the data. In particular, the following steps may be taken:

- Validation of panelists: panelists are validated using the validation rules applicable to the concerned panel 216, 218. Following validation, those (i.e. data from) panelists that have been marked as valid can be subjected to further pre-processing steps.
- Calculation of metrics and/or data reorganization. In order to accelerate calculation of deliverables, raw logs from validated panelists are processed in order to determine predetermined metrics and/or to organize the data into a structure conducive for further analysis.
- Associate Metadata. In parallel to the calculation of necessary metrics/reorganization of raw data, records are associated with corresponding metadata entries.

Following the pre-processing of panel data, calibration actions may be executed using data such as census-level data 211 and/or sample-derived stratification data, optionally structural study 208.

The calibration process may be and typically is a semi-manual or semi-automated process, potentially requiring e.g. an analyst to compute various values, input them into analytical systems, run computational processes, analyze the results, and repeat the process as necessary.

Conceptually, the calibration process may include phases of data reviewing, control value calculation, and application of one or more processing algorithms such as a raking algorithm to determine proper calibration weights for the user-level data based on the established control values.

Fig. 10 illustrates, by way of a general example only, one embodiment of a sample review procedure for calibration variable and category selection to enable control value determination. It shall be understood by a person skilled in the art that he/she may adapt e.g. the illustrated procedure, or utilize an alternative one, to better meet the design objectives set by each real-life use scenario of the present invention.

Indeed, available sample data 1002 may be analyzed and e.g. the following indication determined:

- Category frequencies 1004, the frequency of individual categories among validated panelists (e.g. Gender: Male as a percentage of the total unweighted sample) for the calibration variables.
- Nominal totals/Means 1006, the total value of nominal calibration variables (i.e. total mobile application downloads) and the mean value of nominal calibration variables.
- Category case counts 1008, the unweighted count of cases in each category among validated panelists (e.g. the number of cases with Gender: Male) for all calibration variables.

Based on the above calculations, selected categories may be collapsed (frequency/count below a predetermined threshold) to enhance calibration stability, for instance. An optimized set of calibration variables and categories is to be formed 1010.

Finally, the system is configured to calculate control values 1012 based on these calibration variables and categories by utilizing the available census-level data 211 and e.g. data provided by the structural study 208.

Following calibration, the deliverables may be further subjected to a series of selected quality control checks. This quality control process may be carefully conducted e.g. on a monthly basis, following the updating of structural study calibration data. During quality control procedures, both data stability and accuracy could be examined using any suitable methods as appreciated by a skilled person.

Ultimately, the deliverable(s) may be stored in at least one data repository such as a database on the system back-end, and the customers may be granted access to specific data items via the system UI.

In particular, data may be delivered to subscribing clients via a web-based interface. This web-based interface may conform to one or more of the following features:

- Compatible with major browsers (i.e. MSIE, Firefox, Chrome, Safari).
- Delivery over SSL.
- Similar functionality / look-and-feel across all clients (i.e. data available / content may differ across client groups, but the tool remains the same).

In the above, various embodiments of the present invention were discussed in detail. These embodiments were generally related to both mobile and Internet devices and other similar devices connected to wireless or wired communications networks, and showed how commonly available mobile and Internet devices can be harnessed to automatically and passively collect data on the context of the terminal, such as network or device parameters or performance, or on the behavior of a user relative to the usage of that particular device or other surrounding devices or networks, and ultimately how all of this data can be funneled into a system that creates either cached or real-time analytics and different types of derivative information based on the collected data, and may combine that data with data from other devices or data related to other people, and finally present the cultivated data through various applications back to the user or other recipients.

However, a skilled person will appreciate the fact the scope is not limited to the explicitly disclosed embodiments but covers also other realizations falling under the claim wordings.

In various embodiments of the system, the system may include in addition to a number of servers, a plurality of user devices and further optionally a number of census-level data providing network-centric data sources.

In various embodiments, the aforementioned ontological metadata schema optionally incorporates a unified metadata database, which describes interrelationships and provides for matching concepts and subjects, even though measured and reflected differently in different platforms and data sources providing the collected data, but reflecting the same topics.

In various embodiments, metadata schema incorporates a plurality of canonical schemas to categorize and organize data, wherein optionally there are a number of univalent and multivalent schemas, further optionally one or more of the canonical schemas for producing a deliverable being selected dynamically by the deliverable recipient.

In various embodiments, the aforementioned master device is optionally configured to execute at least one action selected from the group consisting of: track and log data traffic, signals, or other events that take place between the attached device(s) and master device, poll passively or actively the application programming interfaces (API) of one or more functionally attached devices in order to collect measurement data, store collected measurement data temporarily or for a pre-determined duration of time, and send data to one or more network based data collection servers for analysis.

In various embodiments, the aforesaid census-level data may be obtained from Internet network-centric data source, indicating the distribution and/or scale of the subject characteristics and optionally including data points indicative of the behavior of one or more defined populations of users, devices, applications, services, or web sites per predetermined time period, optionally on a daily basis. Optionally, the aforementioned census level-data is obtained from or via a number of Internet network-centric data sources comprising at least one element selected from the group consisting of: network carrier, ad network, ad exchange, site or app analytics platform, network gateway, network proxy, content management platform, application (APP) store, and other content delivery or distribution platform.

Optionally, the aforementioned census-level data regarding a number of applications is obtained from at least one content distribution platform optionally including an application store or digital market place.

**Claims**

1. Electronic system (100, 108, 110, 400, 401A, 401B) for obtaining and analyzing data on online user (102) behavior and other activity having regard to Internet connectable user devices, optionally mobile devices, the system comprising a number of functionally connected server devices (108) comprising processing device (420) for processing instructions and data, memory (422) for storing instructions and other data, and data interface (426) for transferring data, said system being configured to
collect (404, 408) data from a plurality of data sources, said collected data being indicative of Internet (107), content, media, application, and/or device usage, and/or ambient image or audio exposure, comprising

   individual user-level data acquired from user devices (104, 104a, 104b, 105, 217, 402) through passive metering, and

census-level data (107a, 211) indicating behavior and demographic characteristics across the entire population of users, active devices, or measured services,

organize (406) the obtained user-level data and census-level data into a, preferably multivalent, categorized data set utilizing an ontological metadata schema (214, 414), and

determine an electronic deliverable (112, 206, 416) based on an integration of the user-level data and census-level data, wherein census-level data is utilized to calibrate user-level data,

the deliverable having a dynamically selectable scope in terms of a number of interest factors regarding used devices or online behaviors or ambient image or audio exposure, preferably including application usage, application distribution, content usage, content distribution, application monetization, user demographics, device distribution, device characteristics, device usage, and/or time factors,

wherein the system is configured to collect (217) the user-level data from a first user research panel (216) of controlled constitution and having a first number of participants, and a second user research panel (218) with reduced enrollment requirements having regard to data completeness, and preferably also having a greater number of participants, in relation to the first user research panel (216);

**characterized in that** the system is further configured to collect user-level data indicative of behavioral or contextual events external to a user device obtained via a sensor of the device, said sensor including a camera or a microphone and

further **characterised in that** the system is further configured to connect to at least one app store (602, 604) or other remote content distribution platform utilizing a crawler or robot logic entity configured, in order to obtain said census-level data, to execute at least one action selected from the group consisting of: emulate a user or user device associated with the platform, apply platform related API (application programming interface), connect to a proxy (606) between the system and the platform, and apply a VPN tunneling technique.

2. The system of claim 1, wherein the collected data further includes sample-derived statistical stratification data (208) that estimates the distribution of demographic characteristics across the user population, the system being configured to organize also the stratification data into said data set and utilize it in the determination of the deliverable, including the calibration of user-level data.

3. The system of any preceding claim, wherein the system is configured to calibrate user-level data obtained through the second user research panel using census-level data, optionally sample-derived stratification data, and user-level data obtained by means of the first user research panel.

4. The system of any preceding claim, configured to utilize the metadata schema to align more granular user-level data with less granular census-level data through data categorization.

5. The system of any preceding claim, configured to collect user-level data utilizing at least one element selected from the group consisting of: measurement and logging application (217) installed at the user devices, optionally wireless terminal devices, and measurement and logging logic (217) integrated with software intended for other use, said logic being bundled with the software.

6. The system of any preceding claim, wherein measurement and logging logic at a user device (104, 104a, 104b, 217, 402) for enabling user-level data collection comprises at least one feature selected from the group consisting of: heartbeat data collector indicative of device or user activity periods and/or connectivity periods relative to the Internet, user authentication, user identification, user identity logging, event data logging, event metadata or context data logging, timestamp logging, geolocation logging, WiFi status logging, online status logging, carrier logging, roaming status logging, orientation mode logging, download data logging, upload data logging, matching and logging of on-device data and external device provided data.

7. The system of any preceding claim, configured to obtain census-level data regarding a number of applications from at least one content distribution platform through estimation of (700) the number of downloads of an application based on the ranking position thereof, optionally daily number of downloads being estimated based on preferably daily ranking position information, and a model applying the ranking position to provide the estimate, wherein the utilized model preferably includes at least one model selected from the group consisting of: exponential model, lognormal model, power law based model with exponential cut-off, and Lomax model.

8. The system of any preceding claim, configured to obtain census-level data regarding a number of applications from at least one content distribution platform and to utilize said census-level data obtained from said at least one content distribution platform for quality control of behavioral estimates derived based on user-level data and/or to calibrate the user-level data.

9. The system of any preceding claim, configured to determine a number of demographic and behavioral calibration factors based on the census-level data for the user-level data for the calibration.

10. The system of any preceding claim, configured to estimate the user base of user devices and optionally change rate thereof based on the census data preferably including Internet network-centric data.

11. A method (1100) for obtaining and analyzing data on online user behavior and other activity having regard to Internet connectable user devices, optionally mobile devices, to be performed by an electronic system comprising at least one server, said method comprising
collecting (1106, 1108) data from a plurality of data sources, said collected data being indicative of Internet, content, media, application, and/or device usage, and/or ambient audio or video exposure, including at least

individual user-level data acquired from user devices through passive metering, and
census-level data indicating behavioral and demographic characteristics across the entire population of users, active devices, or measured services,

organizing (1110) the obtained user-level data, census-level data, and optionally sample-derived stratification data into a preferably multivalent categorized data set utilizing an ontological metadata schema, and
determining an electronic deliverable based on an integration of the user-level data, census-level data, and optionally sample-derived stratification data, wherein census-level data and optionally said sample-derived stratification data are utilized to calibrate user-level data, wherein the deliverable (1112) has a dynamically selectable scope in terms of a number of interest factors regarding used devices or online behaviors or ambient image or audio exposure, preferably including application usage, application distribution, content usage, content distribution, application monetization, user demographics, device distribution, device characteristics, device usage, and/or time factors, wherein said collecting of the user-level data is executed (217) from a first user research panel (216) of controlled constitution and having a first number of participants, and a second user research panel (218) with reduced enrollment requirements having regard to data completeness, and preferably also having a greater number of participants, in relation to the first user research panel (216),
**characterized by** collecting user-level data indicative of behavioral or contextual events external to a user device and said data being obtained via a sensor of the device, said sensor including a camera or a microphone and further **characterised by** obtaining said census-level data by connecting the system to at least one app store (602, 604) or other remote content distribution platform utilizing a crawler or robot logic entity configured to execute at least one action selected from the group consisting of: emulate a user or user device associated with the platform, apply platform related API (application programming interface), connect to a proxy (606) between the system and the platform, and apply a VPN tunneling technique.

12. A computer program comprising a code means adapted, when run on a computer, to execute the method of claim 11.

13. A carrier medium comprising the computer program of claim 12.

**Patentansprüche**

1. Elektronisches System (100, 108, 110, 400, 401A, 401B) zum Erhalten und Analysieren von Daten über das Verhalten und andere Aktivitäten von Online-Benutzern (102) unter Berücksichtigung von mit dem Internet verbindbaren Benutzergeräten, wahlweise Mobilgeräten, wobei das System eine Anzahl von funktionell verbundenen Server-Geräten (108) umfasst, die eine Verarbeitungsvorrichtung (420) zum Verarbeiten von Anweisungen und Daten, einen Speicher (422) zum Speichern von Anweisungen und anderen Daten und eine Datenschnittstelle (426) zum Übertragen von Daten umfassen, wobei das System dazu ausgestaltet ist zum
Sammeln (404, 408) von Daten aus einer Vielzahl von Datenquellen, wobei die gesammelten Daten auf die Nutzung von Internet (107), Inhalten, Medien, Anwendungen und/oder Geräten und/oder Umgebungsbild- oder Audioexposition hinweisen, umfassend:

einzelner Daten auf Benutzerebene, die von Benutzergeräten (104, 104a, 104b, 105, 217, 402) durch passive Messung erfasst wurden, und

Daten auf Zensusebene (107a, 211), die Verhaltens- und demografische Charakteristika über die gesamte Population von Benutzern, aktiven Geräten oder gemessenen Diensten anzeigen, Organisieren (406) der erhaltenen Daten auf Benutzerebene und der Daten auf Zensusebene in einem vorzugsweise mehrwertigen, kategorisierten Datensatz unter Nutzung eines ontologischen Metadatenschemas (214, 414) und

Bestimmen eines elektronischen Ergebnisses (112, 206, 416) basierend auf einer Integration der Daten auf Benutzerebene und der Daten auf Zensusebene, wobei Daten auf Zensusebene genutzt werden, um Daten auf Benutzerebene zu kalibrieren,
wobei das Ergebnis einen dynamisch auswählbaren Umfang in Bezug auf eine Reihe von Interessenfaktoren in Bezug auf verwendete Geräte oder Online-Verhalten oder Umgebungsbild- oder Audioexposition aufweist, vorzugsweise einschließlich Anwendungsnutzung, Anwendungsverteilung, Inhaltsnutzung, Inhaltsverteilung, Anwendungsmonetarisierung, Benutzerdemografie, Geräteverteilung, Gerätecharakteristika, Gerätenutzung und/oder Zeitfaktoren,
wobei das System dazu ausgestaltet ist, die Daten auf Benutzerebene von einem ersten Benutzerforschungsgremium (216) mit kontrollierter Zusammensetzung und einer ersten Anzahl von Teilnehmern und einem zweiten Benutzerforschungsgremium (218) mit reduzierten Registrierungsanforderungen im Hinblick auf die Vollständigkeit der Daten, das vorzugsweise auch eine größere Anzahl von Teilnehmern in Bezug auf das erste Benutzerforschungsgremium (216) aufweist, zu sammeln (217);
**dadurch gekennzeichnet, dass** das System ferner dazu ausgestaltet ist, Daten auf Benutzerebene zu sammeln, die Verhaltens- oder Kontextereignisse außerhalb eines Benutzergeräts anzeigen, die über einen Sensor des Geräts erhalten werden, wobei der Sensor eine Kamera oder ein Mikrofon enthält und ferner **dadurch gekennzeichnet, dass** das System ferner dazu ausgestaltet ist, eine Verbindung zu mindestens einem App Store (602, 604) oder einer anderen Remote-Content-Verteilungsplattform herzustellen, wobei eine Crawler- oder Roboterlogikeinheit genutzt wird, die zum Erhalten der Daten auf Zensusebene dazu ausgestaltet ist mindestens einen Vorgang auszuführen, der aus der Gruppe ausgewählt ist, die aus Folgendem besteht: Emulieren eines Benutzers oder eines Benutzergeräts, das der Plattform zugeordnet ist, Anwenden einer plattformbezogenen API (Anwendungsprogrammierschnittstelle), Herstellen einer Verbindung zu einem Proxy (606) zwischen dem System und der Plattform und Anwenden einer VPN-Tunneltechnik.

2. System nach Anspruch 1, wobei die gesammelten Daten ferner von einer Probe abgeleitete statistische Stratifizierungsdaten (208) enthalten, welche die Verteilung demografischer Charakteristika über die Benutzerpopulation schätzen, wobei das System dazu ausgestaltet ist, auch die Stratifizierungsdaten in dem Datensatz zu organisieren und sie zur Bestimmung des Ergebnisses zu nutzen, einschließlich der Kalibrierung von Daten auf Benutzerebene.

3. System nach einem vorhergehenden Anspruch, wobei das System dazu ausgestaltet ist, Daten auf Benutzerebene, die durch das zweite Benutzerforschungsgremium erhalten werden, unter Verwendung von Daten auf Zensusebene, wahlweise von einer Probe abgeleiteten Stratifizierungsdaten und Daten auf Benutzerebene, die mittels des ersten Benutzerforschungsgremiums erhalten werden, zu kalibrieren.

4. System nach einem vorhergehenden Anspruch, das dazu ausgestaltet ist, das Metadatenschema zu nutzen, um granularere Daten auf Benutzerebene mit weniger granularen Daten auf Zensusebene durch Datenkategorisierung abzugleichen.

5. System nach einem vorhergehenden Anspruch, das dazu ausgestaltet ist, Daten auf Benutzerebene unter Nutzung mindestens eines Elements zu sammeln, das aus der Gruppe bestehend aus Folgendem ausgewählt ist: einer Messungs- und Protokollierungsanwendung (217), die in den Benutzergeräten, wahlweise drahtlosen Endgeräten, installiert ist, und Messungs- und Protokollierungslogik (217), die in Software integriert ist, die für eine andere Verwendung bestimmt ist, wobei die Logik mit der Software gebündelt ist.

6. System nach einem vorhergehenden Anspruch, wobei die Messungs- und Protokollierungslogik an einem Benutzergerät (104, 104a, 104b, 217, 402) zum Ermöglichen einer Sammlung von Daten auf Benutzerebene mindestens ein Merkmal umfasst, das aus der Gruppe ausgewählt ist, die aus Folgendem besteht: Herzschlagdaten-Kollektor, der Geräte- oder Benutzeraktivitätszeiträume und/oder Konnektivitätszeiträume in Bezug auf das Internet angibt, Benutzerauthentifizierung und Benutzeridentifikation, Benutzeridentitätsprotokollierung, Ereignisdatenprotokollierung, Ereignismetadaten- oder Kontextdatenprotokollierung, Zeitstempelprotokollierung, Geolokalisierungsprotokollierung, WiFi-Status-Protokollierung, Online-Statusprotokollierung, Netzbetreiberprotokollierung, Roaming-Statusprotokollierung, Protokollierung im Orientierungsmodus, Download-Datenprotokollierung, Upload-Datenprotokollierung, Abgleich und Protokollierung von Gerätedaten und von externen Geräten bereitgestellten Daten.

**7.** System nach einem vorhergehenden Anspruch, das dazu ausgestaltet ist, Daten auf Zensusebene bezüglich einer Anzahl von Anwendungen von mindestens einer Inhaltsverteilungsplattform durch Schätzen von (700) der Anzahl von Downloads einer Anwendung basierend auf ihrer Rangfolgeposition, wahlweise einer täglichen Anzahl von Downloads, die basierend auf vorzugsweise täglichen Ranglistenpositionsinformationen geschätzt wird, zu erhalten, und ein Modell, das die Ranglistenposition anwendet, um die Schätzung bereitzustellen, wobei das genutzte Modell vorzugsweise mindestens ein Modell enthält, das aus der Gruppe ausgewählt ist, die aus Folgendem besteht: Exponentialmodell, logarithmisches Normalmodell, Potenzgesetz-basiertes Modell mit exponentiellem Cut-Off und Lomax-Modell.

**8.** System nach einem vorhergehenden Anspruch, das dazu ausgestaltet ist, Daten auf Zensusebene bezüglich einer Anzahl von Anwendungen von mindestens einer Inhaltsverteilungsplattform zu erhalten und die Daten auf Zensusebene, die von der mindestens einen Inhaltsverteilungsplattform erhalten wurden, zur Qualitätskontrolle von Verhaltensschätzungen, die basierend auf Daten auf Benutzerebene abgeleitet wurden, zu nutzen und/oder die Daten auf Benutzerebene zu kalibrieren.

**9.** System nach einem vorhergehenden Anspruch, das dazu ausgestaltet ist, eine Anzahl von demografischen und Verhaltenskalibrierungsfaktoren basierend auf den Daten auf Zensusebene für die Daten auf Benutzerebene für die Kalibrierung zu bestimmen.

**10.** System nach einem vorhergehenden Anspruch, das dazu ausgestaltet ist, die Benutzerbasis von Benutzergeräten zu schätzen und wahlweise die Rate davon basierend auf den Zensusdaten zu ändern, vorzugsweise einschließlich internetnetzwerkzentrierter Daten.

**11.** Verfahren (1100) zum Erhalten und Analysieren von Daten über das Online-Benutzerverhalten und andere Aktivitäten unter Berücksichtigung von mit dem Internet verbindbaren Benutzergeräten, wahlweise Mobilgeräten, das von einem elektronischen System ausgeführt werden soll, das mindestens einen Server umfasst, wobei das Verfahren Folgendes umfasst:

Sammeln (1106, 1108) von Daten aus einer Vielzahl von Datenquellen, wobei die gesammelten Daten auf die Nutzung von Internet, Inhalten, Medien, Anwendungen und/oder Geräten und/oder Umgebungsaudio- oder -videoexposition hinweisen, einschließlich mindestens

einzelner Daten auf Benutzerebene, die von Benutzergeräten durch passive Messung erfasst wurden, und Daten auf Zensusebene, die Verhaltens- und demografische Charakteristika über die gesamte Population von Benutzern, aktiven Geräten oder gemessenen Diensten anzeigen,

Organisieren (1110) der erhaltenen Daten auf Benutzerebene, Daten auf Zensusebene und wahlweise von einer Probe abgeleiteten Stratifizierungsdaten in einem vorzugsweise mehrwertigen, kategorisierten Datensatz unter Nutzung eines ontologischen Metadatenschemas und
Bestimmen eines elektronischen Ergebnisses basierend auf einer Integration der Daten auf Benutzerebene, der Daten auf Zensusebene und der wahlweise von einer Probe abgeleiteten Stratifizierungsdaten, wobei Daten auf Zensusebene wahlweise die von einer Probe abgeleiteten Stratifizierungsdaten genutzt werden, um Daten auf Benutzerebene zu kalibrieren, wobei das Ergebnis (1112) einen dynamisch auswählbaren Umfang in Bezug auf eine Reihe von Interessenfaktoren in Bezug auf verwendete Geräte oder Online-Verhalten oder Umgebungsbild- oder Audioexposition aufweist, vorzugsweise einschließlich Anwendungsnutzung, Anwendungsverteilung, Inhaltsnutzung,
Inhaltsverteilung, Anwendungsmonetarisierung, Benutzerdemografie, Geräteverteilung, Gerätecharakteristika, Gerätenutzung und/oder Zeitfaktoren,
wobei das Sammeln von Daten auf Benutzerebene von einem ersten Benutzerforschungsgremium (216) mit kontrollierter Zusammensetzung und einer ersten Anzahl von Teilnehmern und einem zweiten Benutzerforschungsgremium (218) mit reduzierten Registrierungsanforderungen im Hinblick auf die Vollständigkeit der Daten, das vorzugsweise auch eine größere Anzahl von Teilnehmern in Bezug auf das erste Benutzerforschungsgremium (216) aufweist, ausgeführt wird (217);
**gekennzeichnet durch** Sammeln von Daten auf Benutzerebene, die Verhaltens- oder Kontextereignisse außerhalb eines Benutzergeräts anzeigen und wobei die Daten über einen Sensor des Geräts erhalten werden, wobei der Sensor eine Kamera oder ein Mikrofon enthält und ferner **gekennzeichnet durch** Erhalten der Daten auf Zensusebene durch Herstellen einer Verbindung zwischen dem System und
mindestens einem App Store (602, 604) oder einer anderen Remote-Content-Verteilungsplattform,

wobei eine Crawler- oder Roboterlogikeinheit genutzt wird, die dazu ausgestaltet ist, mindestens einen Vorgang auszuführen, der aus der Gruppe ausgewählt ist, die aus Folgendem besteht: Emulieren eines Benutzers oder eines Benutzergeräts, das der Plattform zugeordnet ist, Anwenden einer plattformbezogenen API (Anwendungsprogrammierschnittstelle), Herstellen einer Verbindung zu einem Proxy (606) zwischen dem System und der Plattform und Anwenden einer VPN-Tunneltechnik.

**12.** Computerprogramm, umfassend ein Code-Mittel, das dazu geeignet ist, wenn es auf einem Computer läuft, das Verfahren nach Anspruch 11 auszuführen.

**13.** Trägermedium, umfassend das Computerprogramm von Anspruch 12.

## Revendications

**1.** Système électronique (100, 108, 110, 400, 401A, 401B) pour obtenir et analyser des données sur un comportement d'utilisateur en ligne (102) et autre activité eu égard à des dispositifs d'utilisateur connectables à Internet, éventuellement des dispositifs mobiles, le système comprenant un nombre de dispositifs de serveur connectés fonctionnellement (108) comprenant un dispositif de traitement (420) pour traiter des instructions et des données, une mémoire (422) pour stocker des instructions et d'autres données, et une interface de données (426) pour transférer des données, ledit système étant configuré pour collecter (404, 408) des données à partir d'une pluralité de sources de données, lesdites données collectées étant indicatives d'une utilisation d'Internet (107), de contenus, de médias, d'applications et/ou de dispositifs, et/ou une exposition vidéo ou audio ambiante, comprenant

des données de niveau utilisateur individuel acquises à partir de dispositifs d'utilisateur (104, 104a, 104b, 105, 217, 402) par le biais d'une mesure passive, et des données de niveau recensement (107a, 211) indiquant des caractéristiques de comportement et démographiques sur toute la population d'utilisateurs, de dispositifs actifs ou de services mesurés,

organiser (406) les données de niveau utilisateur et les données de niveau recensement obtenues dans un ensemble de données catégorisé, de préférence multivalent, en utilisant un schéma de métadonnées ontologique (214, 414), et déterminer un produit électronique livrable (112, 206, 416) sur la base d'une intégration des données de niveau utilisateur et des données de niveau recensement, dans lequel des données de niveau recensement sont utilisées pour étalonner des données de niveau utilisateur,

le produit livrable ayant une portée sélectionnable dynamiquement en termes d'une pluralité de facteurs d'intérêt concernant des dispositifs utilisés ou des comportements en ligne ou l'exposition vidéo ou audio ambiante, de préférence incluant l'utilisation d'applications, la distribution d'applications, l'utilisation de contenus, la distribution de contenus, la monétisation d'applications, des informations démographiques d'utilisateurs, la distribution de dispositifs, des caractéristiques de dispositif, l'utilisation de dispositifs et/ou des facteurs temporels,

dans lequel le système est configuré pour collecter (217) les données de niveau utilisateur à partir d'un premier panel de recherche d'utilisateurs (216) de constitution contrôlée et ayant un premier nombre de participants, et d'un second panel de recherche d'utilisateurs (218) avec des exigences d'inscription réduites eu égard à l'exhaustivité des données et de préférence également ayant un plus grand nombre de participants, par rapport au premier panel de recherche d'utilisateurs (216) ;

**caractérisé en ce que** le système est configuré en outre pour collecter des données de niveau utilisateur indicatives d'événements comportementaux ou contextuels extérieurs à un dispositif d'utilisateur obtenus via un capteur du dispositif, ledit capteur incluant une caméra ou un microphone et

**caractérisé en outre en ce que** le système est configuré en outre pour se connecter à au moins un magasin d'applications (602, 604) ou autre plate-forme de distribution de contenus à distance utilisant un collecteur ou une entité logique robot configurée, afin d'obtenir lesdites données de niveau recensement, pour exécuter au moins une action sélectionnée parmi le groupe consistant à : émuler un utilisateur ou dispositif d'utilisateur associé à la plate-forme, appliquer une API (interface de programmation d'application) liée à la plate-forme, se connecter à un mandataire (606) entre le système et la plate-forme, et appliquer une technique de formation de tunnel VPN.

**2.** Système selon la revendication 1, dans lequel les données collectées comprennent en outre des données de stratification statistiques obtenues par échantillonnage (208) qui estime la distribution de caractéristiques démographiques sur la population d'utilisateur, le système étant configuré pour organiser également les données de stratification dans ledit ensemble de données et pour l'utiliser dans la détermination du produit livrable, incluant l'étalonnage de données de niveau utilisateur.

**3.** Système selon n'importe quelle revendication précédente, dans lequel le système est configuré pour étalonner des données de niveau utilisateur obtenues par le biais du second panel de recherche d'utilisateurs en utilisant des données de niveau recensement, éventuellement des données de stratification obtenues par échantillonnage, et des données de niveau utilisateur obtenues par le biais du premier panel de recherche d'utilisateurs.

4. Système selon n'importe quelle revendication précédente, configuré pour utiliser le schéma de métadonnées pour aligner des données plus granulaires de niveau utilisateur avec des données moins granulaires de niveau recensement par le biais d'une catégorisation de données.

5. Système selon n'importe quelle revendication précédente, configuré pour collecter des données au de niveau utilisateur en utilisant au moins un élément sélectionné parmi le groupe constitué : d'une application de mesure et d'enregistrement (217) installée sur des dispositifs d'utilisateur, éventuellement des dispositifs terminaux sans fil, et d'une logique de mesure et d'enregistrement (217) intégrée avec un logiciel destiné à une autre utilisation, ladite logique étant groupée avec le logiciel.

6. Système selon n'importe quelle revendication précédente, dans lequel une logique de mesure et d'enregistrement sur un dispositif d'utilisateur (104, 104a, 104b, 217, 402) pour permettre une collecte de données de niveau utilisateur comprend au moins une fonction sélectionnée parmi le groupe constitué : d'un collecteur de données de surveillance d'activité d'un utilisateur indicateur de périodes d'activité d'un dispositif ou d'un utilisateur et/ou de périodes de connectivité relative à Internet, d'une authentification d'utilisateur, d'une identification d'utilisateur, d'un enregistrement d'identité d'utilisateur, d'un enregistrement de données d'événement, d'un enregistrement de métadonnées d'événement ou de données de contexte, d'un enregistrement d'horodatage, d'un enregistrement de géolocalisation, d'un enregistrement d'état Wifi, d'un enregistrement d'état en ligne, d'un enregistrement d'un opérateur de réseau, d'un enregistrement d'état d'itinérance, d'un enregistrement de mode d'orientation, d'un enregistrement de données de téléchargement entrant, d'un enregistrement de données de téléchargement sortant, d'une correspondance et d'un enregistrement de données sur un dispositif et de données fournies par un dispositif externe.

7. Système selon n'importe quelle revendication précédente, configuré pour obtenir des données au niveau recensement concernant un nombre d'applications à partir d'au moins une plate-forme de distribution de contenus par le biais d'une estimation (700) du nombre de téléchargements entrants d'une application sur la base de sa position de classement, éventuellement d'un nombre quotidien de téléchargements entrants étant estimé sur la base de préférence d'informations de position de classement de préférence quotidien, et un modèle appliquant la position de classement pour fournir l'estimation, dans lequel le modèle utilisé comprend de préférence au moins un modèle sélectionné parmi le groupe constitué : d'un modèle exponentiel, d'un modèle log-normal, d'un modèle à base de loi de puissance avec coupure exponentielle et d'un modèle de Lomax.

8. Système selon n'importe quelle revendication précédente, configuré pour obtenir des données de niveau recensement concernant un nombre d'applications à partir d'au moins une plate-forme de distribution de contenus, et pour utiliser lesdites données de niveau recensement obtenues à partir de ladite au moins une plate-forme de distribution de contenus pour un contrôle qualité des estimations comportementales obtenues sur la base de données de niveau utilisateur et/ou pour étalonner les données de niveau utilisateur.

9. Système selon n'importe quelle revendication précédente, configuré pour déterminer une pluralité de facteurs d'étalonnage démographiques et comportementaux sur la base des données de niveau recensement pour des données de niveau utilisateur pour l'étalonnage.

10. Système selon n'importe quelle revendication précédente, configuré pour estimer la base des utilisateurs de dispositifs d'utilisateur et éventuellement leur taux de changement sur la base des données de niveau recensement incluant de préférence des données Internet en réseau-centré.

11. Procédé (1100) pour obtenir et analyser des données de comportement d'utilisateur en ligne et autre activité eu égard à des dispositifs d'utilisateur connectables à Internet, éventuellement des dispositifs mobiles, destiné à être effectué par un système électronique comprenant au moins un serveur, ledit procédé comprenant
la collecte (1106, 1108) de données à partir d'une pluralité de sources de données, lesdites données collectées étant indicatives d'une utilisation d'Internet, de contenus, de médias, d'applications et/ou de dispositifs, et/ou une exposition audio ou vidéo ambiante, comprenant au moins

des données individuelles de niveau utilisateur acquises à partir de dispositifs d'utilisateur par le biais d'une mesure passive, et

des données de niveau recensement indiquant des caractéristiques de comportement et démographiques sur toute la population d'utilisateurs, de dispositifs actifs ou de services mesurés,

l'organisation (1110) des données de niveau utilisateur, des données de niveau recensement obtenues, et éventuellement des données de stratification obtenues par échantillonnage, en un ensemble de données catégorisé, de préférence multivalent, en utilisant un schéma de métadonnées ontologique, et

la détermination d'un produit électronique livrable sur la base d'une intégration des données de niveau utilisateur, des données de niveau recensement, et éventuellement des données de stratification obtenues par échantillonnage, dans lequel des données de niveau recensement et éventuellement lesdites données de stratification obtenues par échantillonnage sont utilisées pour étalonner des données de niveau utilisateur, dans lequel le produit livrable (1112) a une portée sélectionnable dynamiquement en termes d'une pluralité de facteurs d'intérêt concernant des dispositifs utilisés ou des comportements en ligne ou une exposition vidéo ou audio ambiante, incluant de préférence l'utilisation d'applications, la distribution d'applications, l'utilisation de contenus, la distribution de contenus, la monétisation d'applications, des informations démographiques d'utilisateurs, la distribution de dispositifs, des caractéristiques de dispositif, l'utilisation de dispositifs et/ou des facteurs temporels,

dans lequel ladite collecte des données de niveau utilisateur est exécutée (217) à partir d'un premier panel de recherche d'utilisateurs (216) de constitution contrôlée et ayant un premier nombre de participants, et d'un second panel de recherche d'utilisateurs (218) avec des exigences d'inscription réduites eu égard à l'exhaustivité des données et de préférence également ayant un plus grand nombre de participants, par rapport au premier panel de recherche d'utilisateurs (216),

**caractérisé par** la collecte de données de niveau utilisateur indicatives d'événements comportementaux ou contextuels extérieurs à un dispositif d'utilisateur et lesdites données étant obtenues via un capteur du dispositif, ledit capteur incluant une caméra ou un microphone et

**caractérisé en outre par** l'obtention desdites données de niveau recensement par la connexion du système à au moins un magasin d'applications (602, 604) ou autre plate-forme de distribution de contenus à distance utilisant un collecteur ou une entité logique robot configurée pour exécuter au moins une action sélectionnée parmi le groupe consistant à : émuler un utilisateur ou un dispositif d'utilisateur associé à la plate-forme, appliquer une API (interface de programmation d'application) liée à la plate-forme, se connecter à un mandataire (606) entre le système et la plate-forme, et appliquer une technique de formation de tunnel VPN.

12. Programme informatique comprenant un moyen de code adapté, quand il est exécuté sur un ordinateur, pour exécuter le procédé selon la revendication 11.

13. Milieu de support comprenant le programme informatique selon la revendication 12.

Figure 1

200    202    D A T A   C O L L E C T I O N    204    DATA PRODUCTION    206

208    STRUCTURAL STUDY

211 CENSUS DATA

210    NETWORK CENSUS DATA

212    APP STORE DATA

214    METADATA

216

217    FIRST USER RESEARCH PANEL

217    218    SECOND USER RESEARCH PANEL, 'VERTO PARTNER PANEL'

102a    DELIVERABLE(S) WEB UI

## Figure 2

300

D A T A   C O L L E C T I O N   F L O W

102    USER

CONTENT/USAGE

104a    ATTACHED DEVICE 1

104a    ATTACHED DEVICE 2

104    MASTER DEVICE 1

104    MASTER DEVICE 2

108    NETWORK DATA COLLECTION SERVER

## Figure 3

400

401A

REMOTE TERMINAL/DATA
COLLECTION LOGIC(S)                402

404                406

USER DATA
COLLECTION/
PANELS LOGIC

CENSUS LEVEL
DATA
COLLECTION
LOGIC

ANALYSIS
LOGIC

408        410

MAIN CONTROL
LOGIC                412

416

DATABASE(S)

ONTOLOGICAL
METADATA
SCHEMA(S)

UI/
DELIVERABLE
PROVISION

414

401B

+12345678000                424

422

PROGRAM / DATA
MEMORY

420        426

CPU

DATA IF.

428        SUPPLEMENTARY
ELEMENT

430

Figure 4

500

- Use computer to browse the web.

510

Computer Users

Mobile Web Users

- Use mobile device to browse the web.

512

Mobile Non-web Users

508

- Use apps on mobile device.
- Do not use mobile device to browse the web.

Figure 5

600

APP STORE PLATFORM 1    602

APP STORE PLATFORM 2    604

GATEWAY PROXY    606

608

MASTER SERVER    ⟷    METADATA STORAGE    610

612

RAW DATA STORAGE

Figure 6

700

702 SELECT MODEL

712 GROUND TRUTH DATA

704 FIT MODEL PARAMETERS

714 MATCHING RANK POSITION DATA

706 RESTATED MODEL

708 ESTIMATE APP DOWNLOADS

SUBSET

RANK POSITION DATA

710 APP DOWNLOADS

716

Figure 7

800

804 METER 217

CLIENT USER

WAITING FOR LOG

WAIT FOR TRIGGER

808 EVENT

806 EVENT DATA & METADATA

810 SAVE DATA TO LOG

812 DEVICE LOG

816 RECEIVE DEVICE LOG

818 RECORD LOG TO DB

UPLOAD LOG

814

Figure 8

Figure 9

Figure 10

1102

1100

START-UP

1104

EXECUTE STRUCTURAL
STUDY, RECRUIT PANELISTS

1106

OBTAIN CENSUS LEVEL DATA
FROM NETWORK-CENTRIC
RESOURCES

1108

OBTAIN USER LEVEL DATA
GATHERED VIA USER
DEVICES

1110

PROCESS THE DATA,
CALIBRATE USER DATA WITH
CENSUS DATA

1116

CUSTOMER INPUT/ORDER

1112

GENERATE AND OUTPUT
DELIVERABLE(S)

1114

END

Figure 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013198125 A1, OLIVER JAMES R
- US 2013097312 A1, MAZUMDAR MAINAK